# EUROPÄISCHE PATENTSCHRIFT

(11) **EP 1 932 427 B1**
(45) Veröffentlichungstag und Bekanntmachung des Hinweises auf die Patenterteilung: **26.01.2011**
(21) Anmeldenummer: 07022343.3
(22) Anmeldetag: 17.11.2007
(51) Int. Cl.: A21C 1/14, B01F 5/20, B05B 7/04, B05B 7/12

(54) **Vorrichtung und Verfahren zum Einarbeiten von Flüssigkeit in schütt- oder rieselfähige Trockenstoffe**
Device and method for incorporating liquid in free-flowing dry substances
Dispositif et procédé destinés à mettre des liquides dans des matières sèches pouvant s'écouler ou en vrac

(30) Priorität: 14.12.2006 DE 102006059051
(43) Veröffentlichungstag der Anmeldung: 18.06.2008
(73) Patentinhaber: DIOSNA Dierks & Söhne GmbH, 49086 Osnabrück (DE)
(72) Erfinder: Etzenbach, Joachim, Dipl.-Ing., 49124 Georgsmarienhütte (DE)
(74) Vertreter: Bünemann, Egon

(56) Entgegenhaltungen:
- DE-U1-202004 018 807
- US-A- 4 323 314
- US-A- 4 491 608

## Beschreibung

Die Erfindung betrifft eine Vorrichtung und ein Verfahren zum Einarbeiten von Flüssigkeit in schütt- oder rieselfähige Trockenstoffe nach dem Oberbegriff des Anspruchs 1 bzw. dem Oberbegriff des Anspruchs 13.

Neuheitliche Entwicklungen insbesondere im Bereich der Backteigzubereitung haben erbracht, daß die Einarbeitung von Flüssigkeit in Trockenstoffe, wie etwa die Einarbeitung von Wasser in Mehl bei der Backteigzubereitung, beschleunigt, verkürzt und auch gerätetechnisch dadurch reduziert werden kann, daß nicht mehr die einzelnen Komponenten mit mechanischen Mischwerkzeugen vermengt und als Teig homogenisiert werden, sondern daß die Misch-, Meng- und Knetvorgänge zu einem erheblichen Teil durch eine hydromechanische Einwirkung der Flüssigkeit auf den Trockenstoff verkürzt werden, indem ein Hochdruck-Flüssigkeitsstrahl (oder deren mehrere) fortlaufend auf eine Schicht des Trockenstoffes aufgebracht wird, der in einem Aufprallbereich vor einer Innenwand eines Mischbehälters durchläuft. Eine entsprechende Vorrichtung ist in DE 20 2004 018 807 U1 dargestellt. Dort wird ein zylindrischer Mischbehälter mit einer zentral angeordneten Rotations-Mischdüse beschrieben, deren Flüssigkeitsstrahl schräg nach unten auf eine Misch-Innenwand gerichtet ist und in einem Aufprallbereich auf den vor der Mischkammerinnenwand niedergehenden Trockenstoff einwirkt.

Für das Einarbeiten ist es wesentlich, daß die Düse nur mit geeigneter Flüssigkeit beaufschlagt wird, die ein Verschmutzen oder Zusetzen verhindert. Auf der anderen Seite ist die gute und gleichmäßige Verteilung und Rieselfähigkeit der Trockenstoffe für die Zuführung wichtig. Auch der Materialfluß der Stoffe nach dem Zusammentreffen von Flüssigkeit und Trockenstoff ist durchaus störungsanfällig. Es ist jedoch in vielen Fällen erforderlich, daß nicht nur düsengängige Flüssigkeiten und schüttoder rieselfähige Trockenstoffe zusammengebracht werden. Insbesondere gibt es flüssige oder pastöse Zusätze, die weder über Düsen noch über eine Trockenstoff-Zuführung einzubringen sind. Dieses Einbringen ist bei der DE 20 2004 018 807 U1 von außen durch die Mischkammerinnenwand vorgesehen, wozu insbesondere schlitzförmige Wandöffnungen in der Mischkammer und Ringverteiler dienen sollen.

Aufgabe der Erfindung ist es demgegenüber, das Einbringen von Zusätzen zu vereinfachen und die Zusätze intensiv mit dem Einarbeiten der Flüssigkeit in die Trockenstoffe einzubringen und dabei die besonderen Möglichkeiten der Druckstrahl-Einmischung auch für die Zusätze zu nutzen.

Dokument US-A-4 491 608 offenbart eine Vorrichtung gemäß dem Oberbegriff des Anspruchs 1 und ein Verfahren gemäß dem Oberbegriff des Anspruchs 13.

Gemäß der Erfindung wird diese Aufgabe von einer Vorrichtung nach dem Oberbegriff des Anspruchs 1 ausgehend mit den kennzeichnenden Merkmalen des Anspruchs 1 und von einem Verfahren nach dem Oberbegriff des Anspruchs 13 ausgehend mit den kennzeichnenden Merkmalen des Anspruchs 13 gelöst.

Hochgeschwindigkeits-Flüssigkeitsstrahlen auch dann noch im Sinne des Vermischens wirksam bleiben, wenn sie vor dem Aufprallbereich schon auf eingespeiste Zusätze treffen.

Die Einspeisung der Zusätze kann natürlich auch in einer Strahlform horizontal oder sogar ansteigend erfolgen. Vorzugsweise werden sie aber mit Schwerkraft niedergehend eingebracht. Die für die Mitnahme der Zusätze vorzusehenden Druckstrahlen können beispielsweise linear auseinandergezogene Breitstrahlen sein, die eine entsprechende Breite eines Aufprallbereichs erfassen. Es sind aber auch bewegliche Düsen mit Vorteil für eine günstige Strahlformung etwa mit runden Düsenöffnungen vorzusehen, die dann zum Erfassen einer größeren Arbeitsbreite pendelnd oder eben rotierend einzusetzen sind.

Insbesondere bei einer rotationsförmig ausgestalteten Vorrichtung lassen sich innerhalb einer im wesentlichen zylindrischen Mischkammerinnenwand Trockenstoffe längs der Innenwand des Mischbehälters von oben zuführen, während ein Vorhang von Zusätzen vor diesen niedergeht, um einen schnell rotierenden Flüssigkeitsstrahl beide durchdringen zu lassen und zu vermischen.

Eine solche Ausführungsform hat sich nicht zuletzt bei der Herstellung von Backteigen erfolgreich einsetzen lassen, die mit der Verarbeitung von Mehl, Wasser und speziellen Zusätzen besonders kritischen Arbeitsbedingungen unterliegen und besonders hohen Ansprüchen an das Arbeitsergebnis genügen müssen. Dabei hat es sich auch gezeigt, daß dieses Einarbeiten zu hoher Ergiebigkeit des Backteigs und sehr guten Qualitäten führt.

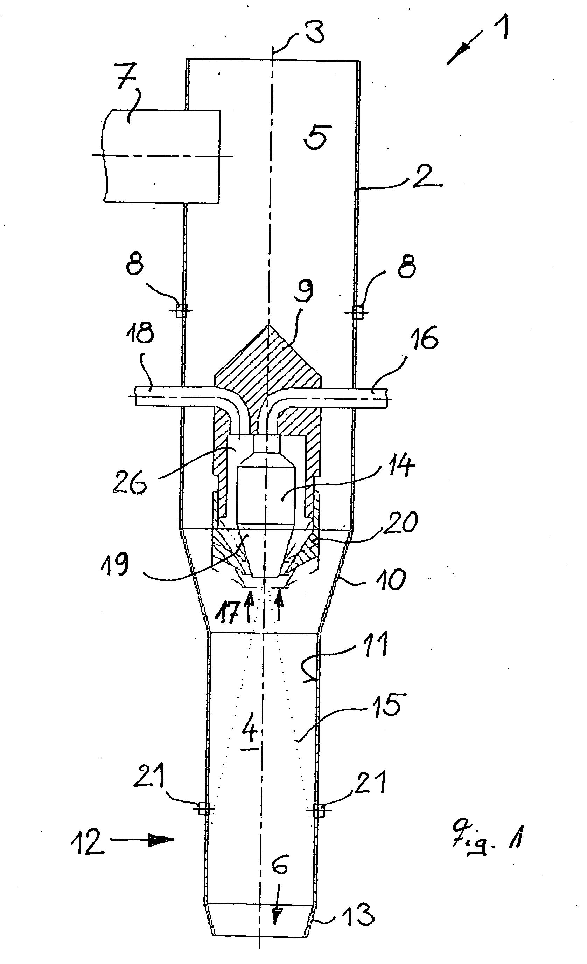

Ein Ausführungsbeispiel der Erfindung ist in der Zeichnung dargestellt und wird nachfolgend näher beschrieben. Die einzige Figur der Zeichnung zeigt einen schematisierten vertikalen Längsschnitt durch eine erfindungsgemäße Mischvorrichtung.

Die in der Zeichnung insgesamt mit 1 bezeichnete Vorrichtung zum Einarbeiten von Flüssigkeit in schütt- oder rieselförmige Trockenstoffe, insbesondere zur Backteigbereitung, weist ein im wesentlichen zylindrisches Gehäuse 2 mit einer vertikalen Mittelachse 3 auf, welche unterseitig eine Mischkammer 4 umschließt. Oberseitig ist eine Füllkammer 5 für Trockenstoffe, hier bei der Backteigzubereitung für Mehl, vorgesehen, nach oben hin und nach unten bis zu einer Austragsöffnung 6 hin offenen für einen freien Ablauf der Trockenstoffe. Eine seitliche stutzenförmige Zuführung 7 für den Nachschub von Trockenstoff vorgesehen.

Wahlweise vorzusehende Drucklufteinlässe 8 können für eine Auflockerung und ein fluidisches Gängigmachen der Trockenstoffe vorgesehen werden, wenn eine Verdichtungs- oder Verklumpungsgefahr besteht. Nach unten hin umlaufen die Trokkenstoffe innerhalb des Gehäuses einen zentralen Verteilerkörper 9, legen sich dann im Bereich einer nach unten hin konisch verjüngten Stufe 10 des Gehäuses 2 an das Gehäuse an und gleiten vor einer Mischkammerinnenwand 11 wandnah nach unten zu einem Aufprallbereich 12, indem sie mit Flüssigkeit vermischt werden. Das in diesem Bereich zylindrische Gehäuse wird in einer weiteren unteren Endstufe 13, die leicht konisch eingezogen ist, noch einmal verengt, um den Materialfluß zu vergleichmäßigen und die Vermischung zu unterstützen.

Der Verteilerkörper 9 ist zentral im Gehäuse 2 angeordnet mit einer nach oben weisenden Kegelspitze, von der aus die Trockenstoffe nach unten abgleiten können. Als Hohlkörper umschließt er eine Rotationsdüse 14, die einen axialsymmetrischen, schräg nach unten gerichteten und in einer Umfangsrichtung zum Aufprallbereich 12 nach außen gegen die Innenwand 11 umlaufenden Düsenstrahl erzeugt. Der konzentrierte und mit hoher Geschwindigkeit austretende Düsenstrahl bringt eine düsengängige Flüssigkeit wie Wasser, Hefewasser o. dgl. mit hoher Geschwindigkeit im Aufprallbereich 12 in den dort vorhangartig an der Innenwand 11 niedergehenden Trockenstoff ein und erzielt eine intensive, schnelle und innige Vermischung.

Die Rotationsdüse 14 ist im vorliegenden Fall als handelsübliches Bauelement vorgesehen, welches innen einen nicht dargestellten, frei drehbaren Düsenkörper enthält, der bei tangentialer Flüssigkeitszufuhr rotiert und damit die gewünschte Bewegungsabfolge im Sinne eines Flüssigkeitskegels 15 erzielt. Es versteht sich allerdings, daß die Düse auch etwa mit Hilfe eines gesonderten Drehantriebs rotierend bewegt werden kann, um die Rotationsgeschwindigkeit enger zu kontrollieren. Die Rotationsdüse 14 wird über eine Flüssigkeitszuleitung 16 mit hohem Druck versorgt, der den erforderlichen Düsenstrahl hoher Geschwindigkeit gewährleistet.

Die Düse 14 ist von einem Ringraum 26 umgeben, der nach unten zu einer ringförmigen Mündung 17 um die Düse 14 herum führt. Dieser Ringraum wird über eine Zuleitung 18, die wie die Zuleitung 16 durch den Verteilerkörper 9 hindurchgeführt ist, gespeist, um an der Mündung 17 Zusätze auszubringen, die weder der Strahlflüssigkeit der Düse 14 noch den außen niederfallenden Trockenstoffen zugesetzt werden sollen. Insbesondere handelt es sich um flüssige oder pastöse Zusätze. Es können aber auch rieselfähige Zusätze sein, die beispielsweise nicht vorzeitig den Trockenstoffen zugemischt werden sollen. Die an der Mündung 17 nach unten hin austretenden Zusätze gelangen zwischen Düse 14 und Aufprallbereich 12 in den Flüssigkeitskegel 15, also in die Einwirkung des rotierenden Düsenstrahls und werden dann mit dem Düsenstrahl zu den vor der Innenwand 11 niedergehenden Trokkenstoffen hin mitgerissen und gleichzeitig mit diesen mit der Flüssigkeit versetzt und gemischt. Die Energie des Düsenstrahls ist dabei so hoch zu bemessen, daß die Mitnahme solche Zusätze das Einarbeiten der Flüssigkeit in die Trockenstoffe gewährleistet.

Zur genaueren Dosierung der Zusätze im Hinblick auf die Menge und Viskosität ist die ringförmige Mündung 17 in ihrer Weite verstellbar. In dieser Hinsicht ist zum einen die Rotationsdüse 14 mit einem sich unterseitig nach unten hin kegelstumpfförmigen Düsengehäuse 19 versehen, welches die Mündung 17 auf der Innenseite definiert. Der Verteilerkörper 9 wird unterseitig durch einen kappenartigen, unten in der Mitte offenen Mantel 20 gebildet, der in Achsrichtung teleskopartig verschiebbar mit dem übrigen Verteilerkörper 9 zusammenwirkt. Bei axialer Verschiebung des Mantels 20 gegenüber dem konischen Teil 19 des Düsengehäuses verändert sich die Weit der Mündung 19.

Es lassen sich somit in einem einheitlichen, kontinuierlich arbeitenden Mischkammersystem mit hoher hydraulischer Energie Vermischungen von trockenen und flüssigen Stoffen wie auch von flüssigen und/oder pastösen Zusätzen erzielen, die weder für einen Durchlauf als Trockenzusätze noch für eine Eingabe über eine Düse geeignet erscheinen. Die Vermischung ist hinsichtlich sämtlicher Bestandeile dosierbar und erfolgt im Durchlaßverfahren überaus schnell und wirkungsvoll.

Die Abförderung des erzielten Gemisches aus dem Aufprallbereich erfolgt unter Schwerkraft und auch unter der Einwirkung des Düsenstrahls, wobei sich die Endstufe 13 als vorteilhaft sowohl für die Beeinflussung der Ablaufgeschwindigkeit wie auch für eine zusätzliche Durchmischung erzielt hat. Zusätzlich sind im Aufprallbereich, vorzugsweise noch oberhalb des Strahlkegelbereichs 15 Düsen 21 in Umfangsrichtung verteilt im Gehäuse vorgesehen, um bedarfsweise noch weitere flüssige Zutaten einzuspritzen, auch eine Benetzung der niedergehenden Trockenstoffe von außen zu erzielen und erforderlichenfalls Hafteffekte des befeuchteten Materials an der Wand mindern.

Es versteht sich, daß die Abmessungen der Vorrichtungsteile entsprechend den zu verarbeitenden Materialien, dem gewünschten Durchsatz und auch den gewünschten Qualitäten anzupassen sind. In diese Hinsicht ist es insbesondere bei der Backteigzubereitung vorteilhaft, wenn der Durchmesser der Mischkammer gegenüber dem übrigen Gehäuse verringert ist. Ebenso stellt sich ein schlanker Kegelwinkel für den Kegel 15 mit einer Anstellung gegenüber der zentralen Achse 3 von weniger als 20°, vorzugsweise bei 10°, als vorteilhaft dar, um einerseits eine hinreichende Aufprallenergie auf die Trockenstoffe und die Innenwand 11, andererseits aber auch einen Förderschub für einen Durchsatz nach unten zu erzielen.

Bei der Backteigbereitung können als Trockenstoffe sowohl Mehl wie auch sonstige Vormischungen verwandt werden. Über den Hochdruckanschluß 16 sind der Düse sowohl Wasser wie auch Hefelösungen zuführbar. Bei sonstigen Flüssigkeiten kommt es insbesondere darauf an, daß die Funktion der Düse nicht durch Verschmutzungen oder Ablagerungen beeinträchtigt werden kann.

Die Zusätze können in weitem Umfang variieren. Es kommen sowohl Vorteige wie Dauersauerteige oder Vormischungen in Betracht. Es können aber auch flüssige Lösungen wie Zucker-, Salz-, Hefe-Lösungen, Öle oder Fette über die Mündung 17 eingegeben werden.

## Patentansprüche

1. Vorrichtung (1) zum Einarbeiten von Flüssigkeit in schütt- oder rieselfähige Trockenstoffe, insbesondere in Mehl zur Backteigzubereitung, bei der in einer zu einem Gefälle geneigten, vorzugsweise vertikal ausgerichteten Mischkammer (4) von oben zugeführte, zu einem Aufprallbereich (12) vor einer Innenwand (11) des Mischraums niedergehende Trockenstoffe aus zumindest einer Düse (14) mit Flüssigkeit (4) in Form eines Druckstrahls hoher Geschwindigkeit mit Aufprall gegen die Innenwand (11) benetzt werden und zu einer tieferliegenden Austragöffnung (6) sinken, **gekennzeichnet durch** eine auf einen Bereich der Mischkammer zwischen Düse (14) und Aufprallbereich (12) gerichtete Mündung (17) für flüssige und pastöse Zusätze, auf die der Hochgeschwindigkeits-Flüssigkeitsstrahl vor dem Aufprallbereich (12) auftrifft und die er mit dem Druckstrahl mitreißt.

2. Vorrichtung nach Anspruch 1, **dadurch gekennzeichnet, daß** der Aufprallbereich (12) sich längs der Innenwald (11) erstreckt und daß die Mündung (17) eine dem Aufprallbereich (12) längserstreckte Form aufweist.

3. Vorrichtung nach Anspruch 2, **dadurch gekennzeichnet, daß** die Düse als Rotationsdüse (14) auf einen ringförmigen Aufprallbereich (12) ausgerichtet ist, wobei die Mündung (17) die Düse (14) als Ringöffnung umschließt.

4. Vorrichtung nach Anspruch 3, **dadurch gekennzeichnet, daß** die Mündung (17) weitenverstellbar ausgebildet ist.

5. Vorrichtung nach Anspruch 4, **dadurch gekennzeichnet, daß** die Düse (14) mit einem Düsengehäuse (19) die Mündung (17) innenseitig begrenzt.

6. Vorrichtung nach Anspruch 5, **dadurch gekennzeichnet, daß** das Düsengehäuse (19) im Bereich der Mündung (17) konisch ausgebildet ist und mit einem umgebenden Mantel (20) die Mündung (17) ausbildet.

7. Vorrichtung nach Anspruch 6, **dadurch gekennzeichnet, daß** das Düsengehäuse (19) und der Mantel (20) axial zueinander verstellbar ausgebildet sind.

8. Vorrichtung nach einem der Ansprüche 3 bis 7, **dadurch gekennzeichnet, daß** die Düse (14) in einem Verteilerkörper (9) angeordnet ist, an dem unterseitig zumindest eine Düsenöffnung und die Mündung angeordnet ist.

9. Vorrichtung nach Anspruch 8, **dadurch gekennzeichnet, daß** der Verteilerkörper (19) mit der Innenwand (11) der Mischkammer (4) eine Ringöffnung für Trokkenstoffe bildet.

10. Vorrichtung nach Anspruch 9, **dadurch gekennzeichnet, daß** oberhalb des Verteilerkörpers (9) eine Einfüllkammer (5) angeordnet ist.

11. Vorrichtung nach Anspruch 10, **dadurch gekennzeichnet, daß** in den Bereich der Einfüllkammer (10) zumindest ein Drucklufteinlaß (8) ausmündet.

12. Vorrichtung nach einem der Ansprüche 1 bis 11, **dadurch gekennzeichnet, daß** die Mischkammer (4) nahe dem Prallbereich (12) mit zumindest einem Flüssigkeitseinlaß (21) versehen ist.

13. Verfahren zum Einarbeiten von Flüssigkeit in schütt- oder rieselfähige Trockenstoffe, insbesondere in Mehl zur Backteigbereitung, bei dem in einer zu einem Gefälle geneigten, vorzugsweise vertikal ausgerichteten Mischkammer (4) zu einem Aufprallbereich (12) vor einer Innenwand (11) der Mischkammer (4) niedergehende Trockenstoffe aus zumindest einer Düse (14) mit Flüssigkeit in Form zumindest eines Druckstrahls hoher Geschwindigkeit mit Aufprall gegen die Innenwand (11) benetzt werden und zu einer tieferliegenden Austragsöffnung (6) sinken, **dadurch gekennzeichnet, daß** in den Bereich des Druckstrahls zwischen Düse (14) und Aufprallbereich (12) flüssige oder pastöse Zusätze eingespeist werden, auf die der Hochgeschwindigkeits-Flüssigkeitsstrahl vor dem Aufprallbereich (12) auftrifft und die er mit dem Druckstrahl mitreißt.

14. Verfahren nach Anspruch 13, **dadurch gekennzeichnet, daß** die Zusätze durch eine oberhalb des Aufprallbereichs (12) liegende Mündung (17) eingegeben werden.

15. Verfahren nach Anspruch 13 oder 14, **dadurch gekennzeichnet, daß** die Zusätze in Form eines ringförmigen Vorhangs um eine Rotationsdüse (14) herum in die Mischkammer (4) eingebracht werden.

## Claims

1. Device (1) for incorporating liquid in free-flowing dry substances and in particular in flour for preparing dough, in which, in a mixing chamber (4) which is inclined at a gradient and which is preferably vertically aligned, dry substances which are fed in from above and which descend, in front of an inner wall (11) of the mixing chamber, to an impact region (12) are wetted from at least one nozzle (14) with liquid (4) in the form of a high-velocity pressurised jet which impacts on the inner wall (11) and drop to a discharge opening (6) situated at a lower level, **characterised by** an orifice (17), which orifice (17) is directed at a region of the mixing chamber between the nozzle (14) and the impact region (12), for liquid and pasty additives on which the high-velocity jet of liquid impacts upstream of the impact region (12) and which it entrains in the pressurised jet.

2. Device according to claim 1, **characterised in that** the impact region (12) extends along the inner wall (11) and **in that** the orifice (17) is of a form which extends longitudinally the impact region (12).

3. Device according to claim 2, **characterised in that** the nozzle takes the form of a rotary nozzle (14) aimed at an annular impact region (12), the orifice (17) enclosing the nozzle (14) in the form of an annular opening.

4. Device according to claim 3, **characterised in that** the width of the orifice (17) can be adjusted.

5. Device according to claim 4, **characterised in that** the nozzle (14) has a body (19) which forms the inner boundary of the orifice (17).

6. Device according to claim 5, **characterised in that** the body (19) of the nozzle is of a conical form in the region of the orifice (17) and forms the orifice (17) together with a surrounding outer shell (20).

7. Device according to claim 6, **characterised in that** the body (19) of the nozzle and the outer shell (20) are designed to be axially adjustable relative to one another.

8. Device according to one of claims 3 to 7, **characterised in that** the nozzle (14) is arranged in a distributing body (9) in the underside of which are arranged at least one nozzle opening and the orifice.

9. Device according to claim 8, **characterised in that** the distributing body (19) forms, with the inner wall (11) of the mixing chamber (4), an annular opening for dry substances.

10. Device according to claim 9, **characterised in that** an input chamber (5) is arranged above the distributing body (9)

11. Device according to claim 10, **characterised in that** at least one inlet (8) for compressed air opens into the region of the input chamber (10).

12. Device according to one of claims 1 to 11, **characterised in that**, close to the impact region (12), the mixing chamber (4) is provided with at least one inlet (21) for liquid.

13. Method for incorporating liquid in free-flowing dry substances and in particular in flour for preparing dough, in which, in a mixing chamber (4) which is inclined at a gradient and which is preferably vertically aligned, dry substances which descend, in front of an inner wall (11) of the mixing chamber (4), to an impact region (12) are wetted from at least one nozzle (14) with liquid in the form of at least one high-velocity pressurised jet which impacts on the inner wall (11) and drop to a discharge opening (6) situated at a lower level, **characterised in that** there are fed into the region of the pressurised jet between the nozzle (14) and the impact region (12), liquid or pasty additives on which the high-velocity jet of liquid impacts upstream of the impact region (12) and which it entrains in the pressurised jet.

14. Method according to claim 13, **characterised in that** the additives are fed in through an orifice (17) situated above the impact region (12).

15. Method according to claim 13 or 14, **characterised in that** the additives are introduced into the mixing chamber (4) in the form of an annular curtain around a rotary nozzle (14).

## Revendications

1. Dispositif (1) destiné à mettre des liquides dans des matières sèches pouvant s'écouler ou en vrac, en particulier dans de la farine pour la préparation de pâte, pour lequel dans une chambre de mélange (4) orientée de préférence verticalement, inclinée en pente, des matières sèches amenées par le haut, descendant vers une zone d'impact (12) devant une paroi intérieure (11) de l'espace de mélange sont arrosées à partir d'au moins une buse (14) de liquide (4) sous la forme d'un jet à haute vitesse avec impact contre la paroi intérieure (11) et descendent vers une ouverture de décharge (6) basse, **caractérisé par** un orifice (17) dirigé sur une zone de la chambre de mélange entre la buse (14) et la zone d'impact (12) pour des additifs liquides et pâteux que rencontre le jet de liquide à haute vitesse avant la zone d'impact (12) et qu'il entraîne avec le jet.

2. Dispositif selon la revendication 1, **caractérisé en ce que** la zone d'impact (12) s'étend le long de la paroi intérieure (11) et **en ce que** l'orifice (17) présente une forme étirée en longueur vers la zone d'impact (12).

3. Dispositif selon la revendication 2, **caractérisé en ce que** la buse est orientée comme une buse rotative (14) sur une zone d'impact annulaire (12), l'orifice (17) entourant la buse (14) comme une ouverture annulaire.

4. Dispositif selon la revendication 3, **caractérisé en ce que** l'orifice (17) est réalisé réglable en largeur.

5. Dispositif selon la revendication 4, **caractérisé en ce que** la buse (14) délimite l'orifice (17) côté intérieur par un boîtier de buse (19).

6. Dispositif selon la revendication 5, **caractérisé en ce que** le boîtier de buse (19) est réalisé conique dans la zone de l'orifice (17) et réalise l'orifice (17) avec une enveloppe (20) environnante.

7. Dispositif selon la revendication 6, **caractérisé en ce que** le boîtier de buse (19) et l'enveloppe (20) sont réalisés axialement réglables l'un par rapport à l'autre.

8. Dispositif selon l'une quelconque des revendications 3 à 7, **caractérisé en ce que** la buse (14) est disposée dans un corps de distribution (9) sur lequel sont disposées côté inférieur au moins une ouverture de buse et l'orifice.

9. Dispositif selon la revendication 8, **caractérisé en ce que** le corps de distribution (19) forme avec la paroi intérieure (11) de la chambre de mélange (4) une ouverture annulaire pour des matières sèches.

10. Dispositif selon la revendication 9, **caractérisé en ce qu'**une chambre de remplissage (5) est disposée au-dessus du corps de distribution (9).

11. Dispositif selon la revendication 10, **caractérisé en ce qu'**au moins une entrée d'air comprimé (8) débouche dans la zone de la chambre de remplissage (10).

12. Dispositif selon l'une quelconque des revendications 1 à 11, **caractérisé en ce que** la chambre de mélange (4) est pourvue près de la zone d'impact (12) d'au moins une entrée de liquide (21).

13. Procédé destiné à mettre des liquides dans des matières sèches pouvant s'écouler ou en vrac, en particulier dans de la farine pour la préparation de pâte, pour lequel dans une chambre de mélange (4) orientée de préférence verticalement, inclinée en pente, des matières sèches descendant vers une zone d'impact (12) devant une paroi intérieure (11) de la chambre de mélange (4) sont arrosées à partir d'au moins une buse (14) de liquide (4) sous la forme d'un jet à haute vitesse avec impact contre la paroi intérieure (11) et descendent vers une ouverture de décharge basse (6), **caractérisé en ce que** dans la zone du jet entre la buse (14) et la zone d'impact (12) sont injectés des additifs liquides ou pâteux que rencontre le jet de liquide à haute vitesse avant la zone d'impact (12) et qu'il entraîne avec le jet.

14. Procédé selon la revendication 13, **caractérisé en ce que** les additifs sont introduits par un orifice (17) se trouvant au-dessus de la zone d'impact (12).

15. Procédé selon la revendication 13 ou 14, **caractérisé en ce que** les additifs sont introduits sous la forme d'un rideau annulaire autour d'une buse rotative (14) dans la chambre de mélange (4).
